Europäisches Patentamt

European Patent Office

Office européen des brevets

(11) Veröffentlichungsnummer : **0 459 947 B1**

(12)                     **EUROPÄISCHE PATENTSCHRIFT**

(45) Veröffentlichungstag der Patentschrift :
25.01.95 Patentblatt 95/04

(51) Int. Cl.⁶ : **G01L 5/00, B29C 45/76**

(21) Anmeldenummer : 91810382.1

(22) Anmeldetag : 21.05.91

(54) **Holmkraftmessystem an beispielsweise Spritzgiessmaschinen.**

(30) Priorität : 31.05.90 CH 1838/90

(43) Veröffentlichungstag der Anmeldung :
04.12.91 Patentblatt 91/49

(45) Bekanntmachung des Hinweises auf die
Patenterteilung :
25.01.95 Patentblatt 95/04

(84) Benannte Vertragsstaaten :
AT DE FR IT

(56) Entgegenhaltungen :
PATENT ABSTRACTS OF JAPAN vol. 14, no.
221 (M-971)(4164) 10. Mai 1990 & JP-A-2052718
PLASTVERARBEITER, Bd. 22, Nr. 1, Januar
1971, Speyer/Rhein, DE, Seiten 9-16; R.MERI-
DIES: "Die Messung der Schliesskraft an
Spritzgiessmaschinen mit Kniehebelschliesseinheit"
KUNSTSTOFFE, Bd. 69, Nr. 10, Oktober 1979,
München, DE, G. MENGES & P. GEISBÜSCH:
"Neues Verfahren zur Maschinen- und Prozessüberwachung beim Spritzgiessen"

(56) Entgegenhaltungen :
TECHNISCHES MESSEN TM, Bd. 56, Nr. 10,
Oktober 1989, München, DE, Seiten 389-393; J.
KIRSCHNER, W. BURGER & R.HALLER:
"Verfahren zur Druck- und Temperaturmessung in hochbelasteten Nocken-Rollenstös-
sel-Kontakten"
IEEE ENGINEERING IN MEDICINE AND BIO-
LOGY MAGAZINE, Bd. 11, November 1989,
New York, US, Seiten 1483-1484; R.A. PAX, JR.,
J.G. WEBSTER & R.RADWIN: "A conductive
polymer sensor for the measurements of palmar pressures"
MESSEN + PRÜFEN/AUTOMATIK, Nr. 9, September 1977, Bad Wörishofen, DE, Seiten
536-542; H. GRASSL: "Ein neues piezoelektrisches Miniatur-Dreikomponenten-Kraftmesselement", Seiten 162, 163 aus dem Buch
Tichy/Gautschi: "Piezoelektrische Messtechnik", Berlin, DE, 1980

(73) Patentinhaber : K.K. HOLDING AG
Eulachstrasse 22
CH-8408 Winterthur (CH)

(72) Erfinder : Sonderegger, Hans-Conrad
Sonnhaldenstrasse 7
CH-8413 Neftenbach (CH)
Erfinder : Wolfer, Peter
Alte Steinerstrasse 9
CH-8450 Kleinandelfingen (CH)
Erfinder : Brem, Paul
Etzelstrasse 14
CH-8636 Wald (CH)

**Beschreibung**

Die Erfindung betrifft ein Holmkraftmesssystem an Spritzgiessmaschinen, Pressen und weiteren Maschinen mit zyklischen Arbeitsvorgängen.

Sie bezieht sich hauptsächlich auf Produktionsmaschinen der Kunststoffindustrie, insbesondere auf zyklisch arbeitende Spritzgiessmaschinen. Sie kann jedoch auch an Pressen, Schlag-Verformungsmaschinen und allgemein an Anlagen, in denen variable Kräfte mit Grossverschraubungen zu überwachen sind, angewendet werden. So könnte das Messsystem auch in der chemischen Verfahrenstechnik von Bedeutung sein.

Zur näheren Erklärung der Erfindung wird das Beispiel einer Spritzgiessmaschine beschrieben.

Zur Ueberwachung eines gleichmässigen Einspritzvorgangs bei der Massenfabrikation von Kunststoffteilen ist der Druckverlauf in der Spritzform von ausschlaggebender Bedeutung. Der Verlauf des Druckvorganges in der Form wird in der Veränderung der Zusammenpressung der beiden Formhälften in den meist vier Holmen der Maschine messbar. Kennt man den Kraftverlauf in den Holmen, so ist automatisch ein Gesamtdruckverlauf in der Form nachvollziehbar. In vielen Fällen kann diese Grösse direkt zur Steuerung der Spritzschnecke verwendet werden. Für komplizierte Präzisionsteile, an denen der Druckaufbau an mehreren Stellen verfolgt werden muss, werden Spezial-Drucksensoren direkt in die Spritzform eingebaut.

Um die Kraftverläufe der Schliesskräfte in den Holmen erfassen zu können, sind verschiedene Messmethoden angewandt worden. Alle Techniken der Messung an Holmenoberflächen, wie z.B. das Aufbringen von Dehnmesselementen scheiden aus, weil dadurch die Bewegungsfreiheit der Werkzeugträger behindert wird. Es sind deshalb Kraftmesstechniken bekannt geworden, welche die Dehnung in Endbohrungen der Holme messen, deren Messausgänge an den steuerseitigen Enden der Holme angebracht sind.

Um nach diesem Prinzip in die Bereiche gleichmässig verteilter Zugspannung zu kommen, sind in der Praxis lange Bohrungen nötig, um die Dehnsensoren richtig zu plazieren. Ungünstig plazierte Dehnsensoren messen falsch.

In vielen Anwendungen wird deshalb nach einer Lösung gesucht, die ohne Anbohren der hochbelasteten Holme auskommt. Erfindungsgemäss wird dazu ein Dünnscheibensensor vorgeschlagen, der eine sehr geringe Einbauhöhe h aufweist und auf einfache Weise unter die Holmenzugmutter gelegt wird. Die Dimensionen des Dünnscheibensensors entsprechen jenen einer Normunterlagsscheibe. Damit sind keine mechanischen Veränderungen an den Kraftüberleitstellen der Holme notwendig, sodass die Erfindung sowohl als Neuausrüstung, wie auch als Nachausrüstung geeignet ist.

Nach dem Stand der Technik kann mit Dehnungssensoren in der Bohrung eine Absolutgenauigkeit der Holmkraft auf ca. ±3% erreicht werden. Mit dem erfindungsgemässen Dünnscheibensensor kann der vom Werk kalibrierte Sensor direkt ausgewertet werden, wobei mit Genauigkeiten von ±1% gerechnet werden kann. Eine Nachkalibrierung im eingebauten Zustand kann auf Verklemmungen der Holme in den Führungsrahmen hindeuten, die behoben werden müssen.

Die Erfindung ergibt damit neue Möglichkeiten zur Ueberwachung der Qualität der Spritzteile wie auch zur Ueberwachung der Maschinenfunktion, ohne dass mechanische Veränderungen an wichtigen kraftleitenden Teilen notwendig werden. Die Erfindung eignet sich deshalb nicht nur für Neuausrüstung, sondern besonders auch für Nachausrüstung von Maschinen, die in Betrieb sind.

Anhand der folgenden 9 Figuren sollen die Gedanken der Erfindung dargelegt werden. Es zeigen:

Fig. 1    Spritzgiessmaschine Stand der Technik mit Holmkraftmessung mittels Dehnungsaufnehmer in Bohrungen

Fig. 2    Detailanordnung der Dehnungsmessung in Bohrung Stand der Technik

Fig. 3    Direkte Holmkraftmessung mit erfindungsgemässer Dünnscheiben-Anordnung

Fig. 4    Detail eines Kraftmesselementes

Fig. 5    Detail eines Kraftmesselementes

Fig. 6    Erfindungsgemässe Dünnscheiben-Anordnung im Schnitt

Fig. 7    Erfindungsgemässe Dünnscheiben-Anordnung im Grundriss

Fig. 8    Kalibrieranordnung für Gesamtanlage

Fig. 9    Kalibrieranordnung der Gesamtanlage.

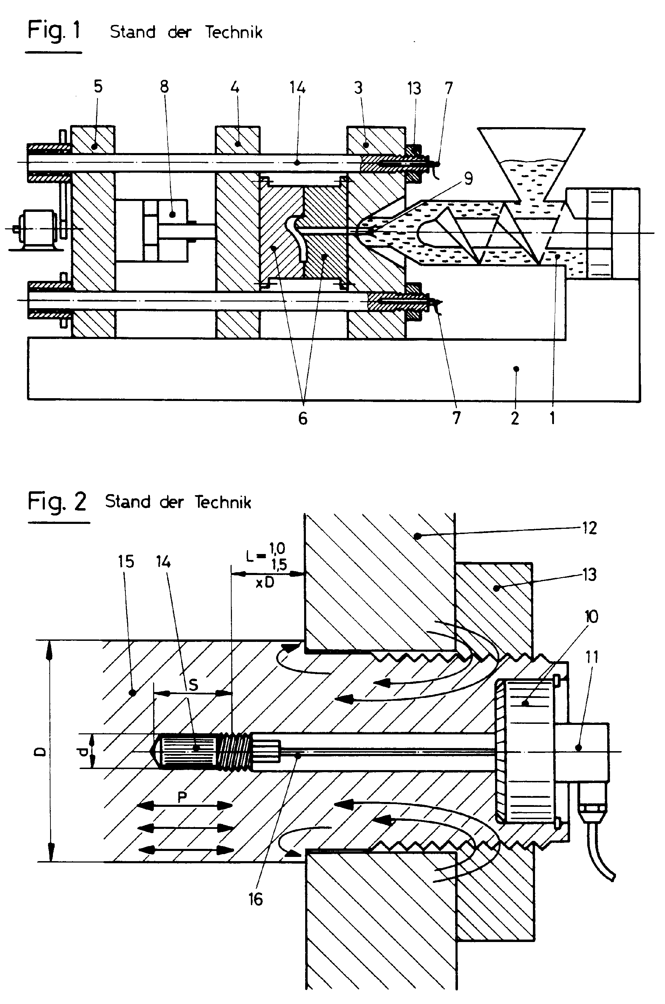

Fig. 1 stellt schematisch eine Spritzgiessmaschine dar, wobei 1 den Schneckenkopf darstellt, in dem die Pressmasse erhitzt und vorkomprimiert wird. Auf dem Maschinenrahmen 2 sind feste und bewegliche Teile der Maschine montiert. Im Einspritzblock 3 endet der Schneckenkopf 1 mit der Spritzdüse 9. Im Werkzeugblock 4 ist die Werkzeugform 6 montiert. Auf dem feststehenden Verstellblock 5 sind die Verstellantriebe untergebracht. In jedem Holm 14 sind Dehnungssensoren 7 in Bohrungen eingebaut.

Fig. 2 stellt ein Detail eines handelsüblichen Sensoreinbaus dar, Stand der Technik. Die Dehnung des Holms 14 wird mit dem fest eingeschraubten Dehnungssensor 15 gemessen, dessen Dehnlänge 'S' ein Mehrfaches des Durchmessers d beträgt. Der Dehnungssensor 15 ist über die Kabelverbindung 16 mit dem Vorverstärker 10 verbunden. Stecker 11 stellt die Verbindung zum Zentralsteuerkasten her. Der Dehnungssensor 15 muss in einer Tiefe angeordnet werden, in welcher bereits eine möglichst homogene Verteilung der Spannungskräfte P gewährleistet ist. Dies wird mit einem Abstand L = 1.0...1.5xD erreicht. Der Flansch 12 des Einspritzblockes ist auf diesem Beispiel mit einer Schulterpartie des Holmes 14 festgemacht. Andere Konstruktionen weisen diese Schulterpartie nicht auf, da sie eine erhebliche Kerbwirkung hat.

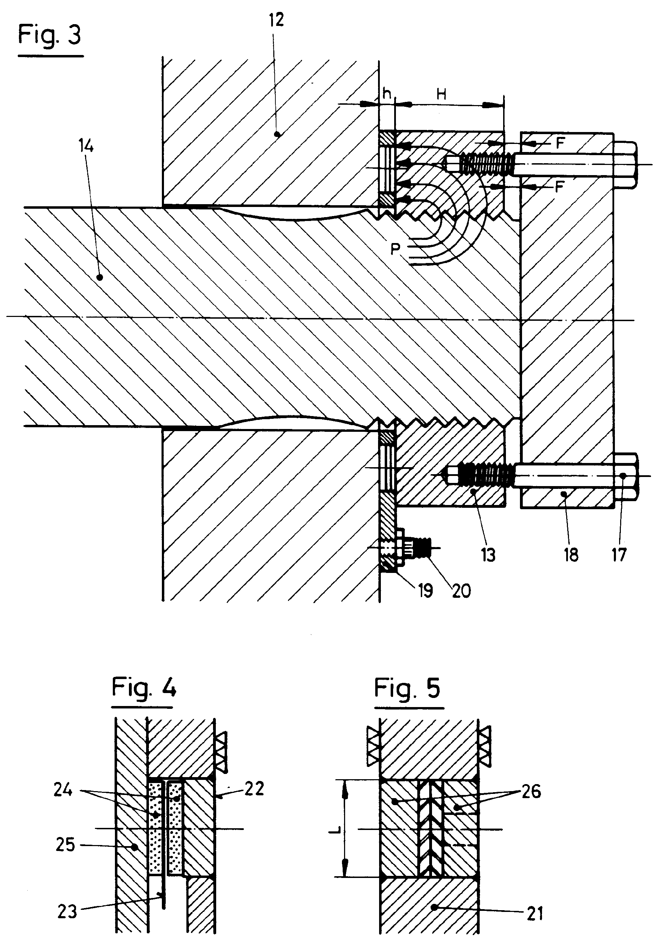

Fig. 3 stellt die erfindungsgemässe Lösung des Holmkraftmessproblems dar. 12 stellt die Flanschpartie des Einspritzblocks 3 dar. 19 ist der Dünnscheiben-Kraftsensor, dessen Einbauhöhe h ein Bruchteil der Mutterhöhe H ist. Als praktische Höhe h ergab sich $\frac{H}{6}...\frac{H}{10}$. Durch die geringe Höhe h kann der Dünnscheiben-Kraftsensor eingebaut werden, ohne dass eine Aenderung an wichtigen, hochbeanspruchten Teilen notwendig wird. Eine bevorzugte Konstruktion sieht zur Mutter 13 einen Gegenflansch 18 vor, der mittels Zugschrauben 17 dafür sorgt, dass die Mutter 13 in jedem Belastungszustand immer auf denselben Gewindeflanken aufliegt, wodurch sich ein Lösen der Mutter 13 verhindern lässt. Damit lassen sich die gefährlichen Kraftwechsel im Gewinde vermeiden und die Muttersicherung erfordert keine kerbwirkenden Bearbeitungen.

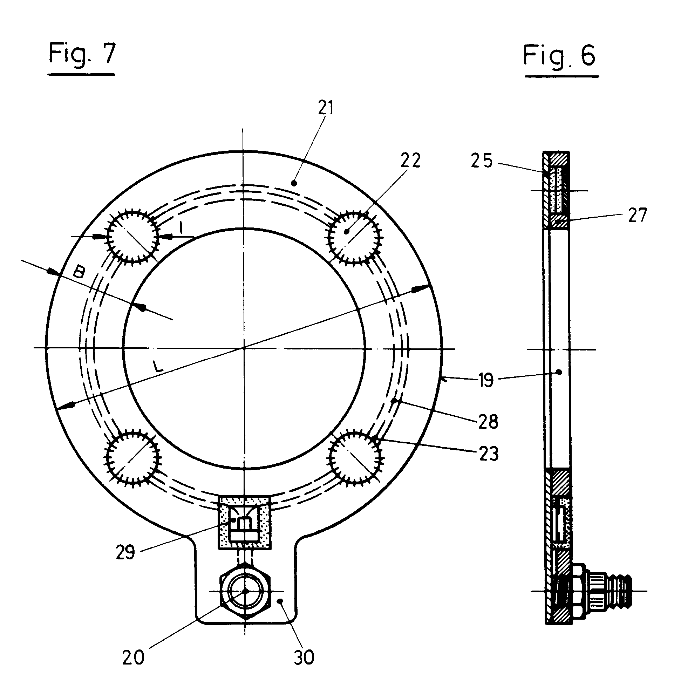

Fig. 4 zeigt ein Detail des erfindungsgemässen DünnscheibenKraftsensors 22 von Fig. 7. Das Messelement 22 mit den Piezokristallen 24 und der Elektrode 23 ist unter Vorspannung mit der Metallscheibe 21 verschweisst.

Nach der Verschweissung wird die Oberfläche der Metallscheibe 21 gleichzeitig mit dem Uebermass aufweisenden Messelement 22 überschliffen.

Fig. 5 zeigt eine Variante von Fig. 4. Die Messzelle 22 ist in einer Durchgangsbohrung 'L' der Metallscheibe 21 angeordnet. Die Piezokristallscheiben 24 sind zwischen den Deckplatten 26 unter Vorspannung in der Metallscheibe 21 verschweisst. Nach Einschweissung werden beide Oberflächen überschliffen vvv.

Fig. 6 zeigt den erfindungsgemässen Dünnscheiben-Kraftsensor 19 im Schnitt zu Fig. 7, wobei das Konstruktionsprinzip nach Fig. 4 nochmals gezeigt wird. Die Erfindung kann jedoch auf verschiedenen Varianten basieren.

Fig. 7 zeigt den erfindungsgemässen Dünnscheiben-Kraftsensor 19 im Grundriss. Als Beispiel sind vier Messelemente 22 in der Metallscheibe 21 eingeschweisst. Der Durchmesser '1' der Messelemente 22 steht in einem Verhältnis zur Scheibenbreite 'B' und zum Gesamtdurchmesser 'L'. Die Messelemente 22 sind kraftmässig parallel geschaltet zur Metallscheibe 21, da deren Oberflächen genau plan sind. Die Messelemente 22 messen damit nur einen bestimmten Teil der vom Holm 14 übertragenen Gesamtkraft P. Je mehr Messelemente 22 angeordnet werden, je grösser wird die Messempfindlichkeit. Weil die Messelemente 22 jedoch nahezu so steif sind wie die volle Metallscheibe 21 und die zu messenden Kräfte sehr gross sind, ergeben schon wenige Messelemente 22 ein wesentlich grösseres Messsignal, als dies bei Dehnungssensoren 15 nach Fig. 2 möglich ist. Zur Impedanzwandlung bzw. Signalverstärkung wird ein Verstärker 29 direkt in den Dünnscheiben-Kraftsensor 19 eingebaut. Er ist über die Signalleitung 28 mit den einzelnen Elektroden 23 verbunden. Die Anschlussleitung erfolgt über Anschlussbuchse 20, die in der Anschlusspartie 30 montiert ist.

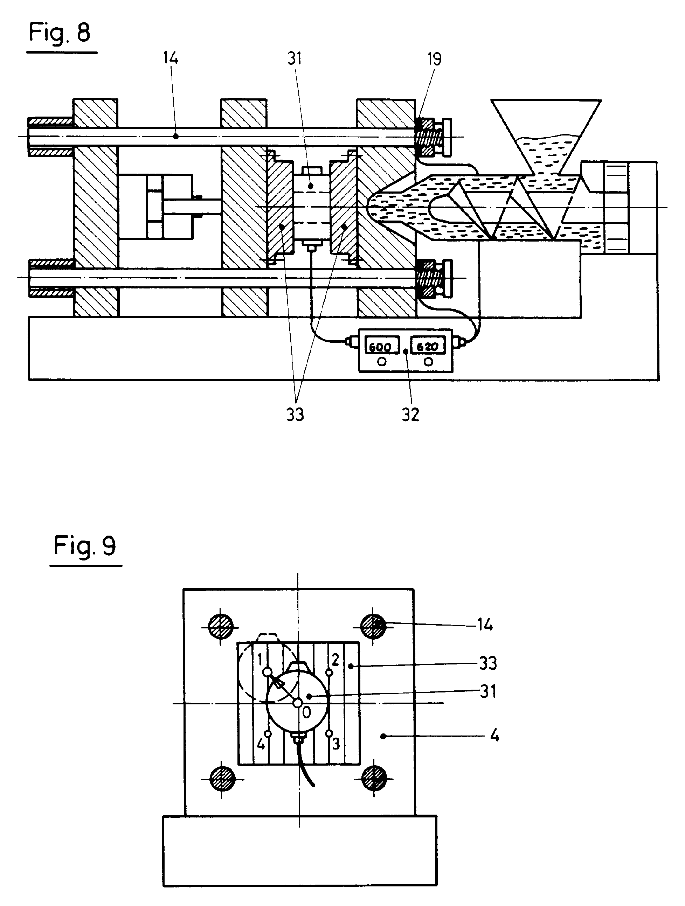

In Fig. 8 ist eine mögliche Kalibrieranordnung dargestellt mit dem Kalibriersensor 31 der Messelektronik 32, die mit dem Dünnscheiben-Kraftsensor 19 verbunden ist.

In Fig. 9 ist angedeutet, wie mittels verschiedener Messpositionen 0, 1, 2, 3, 4 die Kraft der Einzelholme, wie auch die Gesamtkraft gemessen werden kann. 31 ist der Kalibriersensor, der zwischen zwei Aufspannplatten 33 angeordnet ist.

Der erfindungsgemässe Dünnscheiben-Kraftsensor 19 ist auf piezoelektrischer Basis aufgebaut, weil der zyklische Vorgang der Maschine eine einfache Nullung vor jedem Messhub möglich macht. Als Piezokristallscheiben werden Quarzscheiben vorgesehen, in vielen Fällen kann aber Piezokeramik vorteilhafter sein. Andere Sensortechniken wie DMS, Dünnfilm, piezoresistive oder kapazitive können gegebenenfalls für ein Dünnscheiben-Kraftsensorkonzept in Frage kommen. Bezüglich Betriebssicherheit ist jedoch die piezoelektrische Anordnung infolge der einfachen Signalableitung und der Steifheit die geeignete Technik für den erfindungsgemässen Dünnscheiben-Kraftsensor. Zudem ermöglicht das piezoelektrische Konzept sehr einfache Impedanzwandler/Verstärker 29, die in Miniaturausführung direkt in die Anschlusspartie 30 eingebaut werden können. Damit kann die Verbindungsleitung von der Anschlussbuchse 20 zur Signalverarbeitung als normale Kabelleitung ausgeführt werden.

Für die Kalibrierung der Anlage wird ein Kalibriersensor 31 zwischen die Aufspannplatten 33 montiert und mit der Messelektronik 32 verbunden. Bei genauer Zentrierung des Kalibriersensors 31 auf Pos. 0 müssen die vier Holmsensoren genau gleiche Werte anzeigen. Ist dies nicht der Fall, so müssen interne Verspannungen und Verkantungen oder ungleiche Spannlängen vorliegen, welche behoben werden müssen.

Zur weiteren Lokalisierung unterschiedlicher Holmbeanspruchungen kann der Kalibriersensor 31 schrittweise in verschiedene Eckpositionen 1, 2, 3, 4 gebracht werden.

Die Dünnscheiben-Kraftsensoren im Zusammenhang mit dem Kalibriersensor gestatten damit eine einwandfreie Ueberprüfung des Gesamtzustandes der Maschine, was als vorbeugender Unterhalt im Serviceplan der Spritzgiessmaschine festgelegt sein sollte.

Die Ausrüstung der Maschine mit erfindungsgemässen Dünnscheiben-Kraftsensoren wird deren einwandfreie Funktionsfähigkeit in regelmässigen Abständen überprüfen lassen, wodurch deren Anschaffung in vernünftiger Frist amortisiert werden kann. Das erfindungsgemässe Holmkraftmesssystem mit Dünnscheiben-Kraftsensoren und entsprechender Auswerte-Elektronik, gestattet die Maschine insbesondere bei exzentrisch beanspruchten Werkzeugformen optimal auszunutzen und die Grenzwerte laufend unter Kontrolle zu halten. Das erfindungsgemässe Holmkraftmesssystem schafft damit einen vollständig überwachten Betriebsablauf, welcher für gleichmässig hohe Qualität der produzierten Spritzteile sorgt, sie ermöglicht aber auch eine sorgfältige periodische Ueberwachung der ganzen Maschinenanlage auf einwandfreien mechanischen Zustand.

## Patentansprüche

1.  Holmkraftmesssystem an Spritzgiessmaschinen, Pressen und weiteren Maschinen mit zyklischen Arbeitsvorgängen, dadurch gekennzeichnet, dass jeder Holm mit einem Kraftsensor ausgerüstet ist, dass der Kraftsensor als Dünnscheiben-Kraftsensor (19) ausgebildet ist und aus einer Metallscheibe (21) mit den Dimensionen einer Normunterlagscheibe besteht, wodurch Nachrüstung möglich ist, dass in die Metallscheibe (21) mindestens ein scheibenförmiges Messelement (22) unter mechanischer Vorspannung eingeschweisst ist, dass Messelement (22) und Metallscheibe (21) gemeinsam überschliffen sind, wodurch sich eine genau definierte Kraftparallelschaltung Metallscheibe (21) zu Messelement (22) ergibt.

2.  Holmkraftmesssystem nach Anspruch 1, dadurch gekennzeichnet, dass das in der Metallscheibe (21) eingesetzte Messelement (22) aus mindestens einer Piezokristallscheibe (24), einer Elektrode (23) und ein oder zwei Deckscheiben (26) besteht, wobei vorzugsweise zwei Piezokristallscheiben (24) Anwendung finden, die aus Quarzkristall oder aus einer Piezokeramik bestehen.

3.  Holmkraftmesssystem nach einem der Ansprüche 1 und 2, dadurch gekennzeichnet, dass in der Anschlusspartie (30) des Dünnscheiben-Kraftsensors (19) eine Impedanzwandler/Verstärkeranordnung untergebracht ist, die über einen Steckeranschluss (20) oder ein integriertes Kabel mit der Signalverarbeitung verbunden ist.

4.  Holmkraftmesssystem nach Anspruch 1, dadurch gekennzeichnet, dass in der Metallscheibe (21) mindestens ein Messelement (22) eingesetzt ist, das auf piezoresistiver, kapazitiver, DMS- oder Dünnfilmtechnologie basiert.

5.  Holmkraftmesssystem nach einem der Ansprüche 1,2,3 und 4, dadurch gekennzeichnet, dass der Dünnscheiben-Kraftsensor (19) aus einer vollen Ringscheibe (25) und einer gelochten Oberscheibe (27) besteht, die miteinander dicht verbunden sind und in welcher mindestens ein Messelement (22) eingebettet ist.

6.  Holmkraftmesssystem nach einem der Ansprüche 1,2,3,4 und 5, dadurch gekennzeichnet, dass das Messelement (22) aus vormontierten Einheiten, die fusioniert oder geklebt sind, besteht und dadurch in Dünnscheiben-Kraftsensoren verschiedener Abmessungen eingebaut sein kann.

7.  Holmkraftmesssystem nach einem der Ansprüche 1 bis 6, dadurch gekennzeichnet, dass weiterhin als Servicegerät ein Kalibriersensor (31), eine Messelektronik (32) sowie eine entsprechende Unterhalts-Software vorgesehen ist, welche jederzeit die Ueberprüfung des Maschinenzustandes ermöglicht.

## Claims

1.  Beam force measuring system on injection moulding machines, presses and other machines with cyclic working processes, characterized by each beam being equipped with a force sensor consisting of a thin disk force sensor (19) and a metal disk (21) having the dimensions of a normal washer, whereby retrofitting is possible, with at least one disk-shaped measuring element (22) welded into the metal disk (21) under mechanical preload, measuring element (22) and metal disk (21) being ground over together, yielding an exactly defined force paralleling between metal disk (21) and measuring element (22).

2. Beam force measuring system according to Claim 1, characterized by the measuring element (22) inserted in the metal disk (21) consisting of at least one piezoelectric crystal disk (24), an electrode (23) and one or two cover disks (26), whereby preferably two piezoelectric crystal disks (24) are employed, consisting of quartz or a piezoelectric ceramic.

3. Beam force measuring system according to one of Claims 1 and 2, characterized by an impedance transformer/amplifier arrangement accommodated in the connection part (30) of the thin disk force sensor (19) and linked via a plug and socket connection (20) or an integrated cable with the signal processing.

4. Beam force measuring system according to Claim 1, characterized by at least one measuring element (22) based on piezoresistive, capacitive, strain gauge or thin-film technology inserted in the metal disk (21).

5. Beam force measuring system according to one of Claims 1, 2, 3 and 4, characterized by the thin disk force sensor (19) consisting of a solid annulus (25) and a perforated top disk (27), which are joined together tightly and in which at least one measuring element (22) is bedded.

6. Beam force measuring system according to one of Claims 1, 2, 3, 4 and 5, characterized by the measuring element (22) consisting of preassembled units mounted or glued, enabling them to be fitted into thin disk force sensors of various dimensions.

7. Beam force measuring system according to one of Claims 1 to 6, characterized by the further provision as service unit of a calibrating sensor (31), measuring electronics (32) and corresponding maintenance software, enabling the state of the machine to be verified at any time.

## Revendications

1. Système de mesure de force dans les tirants des machines à injecter, presses et autres machines à séquences de travail cycliques caractérisé par le fait que chaque tirant est équipé d'un capteur de force, que ce capteur de force est conçu comme un capteur de force à rondelles minces (19) et est constitué par une rondelle métallique (21) ayant les dimensions d'une rondelle normalisée permettant le rattrapage des machines, qu'au moins un élément de mesure (22) en forme de disque est soudé sous précontrainte mécanique dans la rondelle métallique (21), que l'élément de mesure (22) et la rondelle métallique (21) sont rectifiés simultanément d'où un flux de force parallèle défini avec précision entre rondelle métallique (21) et élément de mesure (22).

2. Système de mesure de force dans les tirants selon revendication de brevet 1 caractérisé par le fait que l'élément de mesure (22) installé dans la rondelle métallique (21) se compose d'au moins une rondelle en cristal piézique (24), d'une électrode (23) et d'une ou de deux plaques d'obturation (26) étant entendu que le cas préférentiel comportera deux rondelles en cristal piézique (24) que ce soit du cristal de quartz ou de la céramique piézique.

3. Système de mesure de force dans les tirants selon revendications de brevet 1 et 2 caractérisé par le fait qu'un dispositif convertisseur d'impédance / amplificateur est intégré dans la partie de raccordement (30) du capteur à rondelles minces (19) et que ce dispositif est relié par une prise (20) ou un câble intégré avec l'installation de traitement du signal.

4. Système de mesure de force dans les tirants selon revendication de brevet 1 caractérisé par le fait que la rondelle métallique (21) comprend au moins un élément de mesure basé sur la technologie piézo-résistive, capacitive, des jauges de contrainte ou sur celle des films à couche mince.

5. Système de mesure selon l'une des revendications de brevet 1, 2, 3 et 4 caractérisé par le fait que le capteur de force à rondelles minces (19) se compose d'une rondelle pleine (25) et d'une rondelle supérieure trouée reliées entre elles de façon étanche et dans lesquelles se trouve intégrée au moins un élément de mesure (22).

6. Système de mesure de force dans les tirants selon revendication de brevet 1, 2, 3, 4 et 5 caractérisé par le fait que l'élément de mesure (22) est formé de modules pré-assemblés, soudés ou collés, et qui peut ainsi être monté dans des capteurs de force à rondelles minces de dimensions variables.

7. Système de mesure de force dans les tirants selon les revendications de brevet 1 à 6 caractérisé par le fait qu'un appareil de maintenance formé d'un capteur d'étalonnage (31), d'une électronique de mesure (32) ainsi que d'un logiciel de maintenance est prévu qui permet à tout moment de surveiller l'état de la machine.

**Fig. 1** Stand der Technik

**Fig. 2** Stand der Technik

## Fig. 3

## Fig. 4

## Fig. 5

Fig. 7

Fig. 6

## Fig. 8

## Fig. 9